# EUROPÄISCHE PATENTSCHRIFT

(11) **EP 3 240 723 B1**
(45) Veröffentlichungstag und Bekanntmachung des Hinweises auf die Patenterteilung: **06.01.2021**
(21) Anmeldenummer: 16781996.0
(22) Anmeldetag: 13.09.2016
(51) Int. Cl.: B62J 1/00, B62K 13/00, B62K 3/00, B62K 15/00

(54) **TRETROLLER MIT ANSTECKBAREM ODER ANGELENKTEM ELEMENT**
SCOOTER HAVING AN ELEMENT THAT CAN BE ATTACHED OR THAT IS CONNECTED IN AN ARTICULATED MANNER
TROTTINETTE POURVUE D'UN ÉLÉMENT RAPPORTÉ OU ARTICULÉ

(30) Priorität: 16.09.2015 AT 6072015
(43) Veröffentlichungstag der Anmeldung: 08.11.2017
(73) Patentinhaber: Scoot & Ride GmbH, 4710 Grieskirchen (AT)
(72) Erfinder: KIRCHSCHLAGER, Robert, 4060 Leonding (AT); BERNDORFER, Wolfgang, 4723 Natternbach (AT)
(74) Vertreter: Burgstaller, Peter
(86) Internationale Anmeldenummer: PCT/AT2016/060056
(87) Internationale Veröffentlichungsnummer: WO 2017/045002

(56) Entgegenhaltungen:
- US-A- 6 089 586
- US-A1- 2015 097 346
- US-S1- D 631 102

## Beschreibung

Die hier offenbarte Erfindung betrifft einen Tretroller umfassend eine Stehfläche, zumindest ein an die Stehfläche angelenktes Hinterrad und zumindest ein an der Stehfläche angelenktes Vorderrad.

Es ist nach dem Stand der Technik denkbar, dass den Tretroller benützende Personen auf der Stehfläche stehen und/oder sitzen.

WO0003773 zeigt einen Tretroller mit einer Stehfläche. Es ist ein Hinterrad und eine eine Haltestange umfassende Lenkvorrichtung an der Stehfläche angeschlossen. Die Lenkvorrichtung erlaubt die Stellung von an der Lenkvorrichtung angeschlossenen Vorderrädern. Es ist vorgesehen, dass der Benutzer auf der Stehfläche eine stehende Haltung einnimmt und den Tretroller über die als Element wirkende Haltestange steuert. Es ist weiters denkbar, dass eine Person auf der Stehfläche sitzt und so über die Haltestange den Tretroller steuert. WO0003773 offenbart keinen Hinweis auf eine Verwendung der Haltestange als Sitz. US4941670 offenbart einen Tretroller mit einer Stehfläche, an dieser Stehfläche angelenkten Rädern und einen an der Stehfläche angeschlossenen Rahmen mit Haltegriffen, wobei der Rahmen mitsamt Haltegriffen als Haltestange verwendet werden kann. Es ist weiters am Rahmen eine Sitzfläche angebracht. Es findet sich in US4941670 kein Hinweis auf eine Umwandlung des Rahmens mitsamt Haltegriffen zu einer Sitzfläche. Die Sitzfläche kann unabhängig von einer Verwendung des Rahmens mitsamt Haltegriffen als solche verwendet werden.

FR2467003 beschreibt ein Skateboard, auf welches eine Haltestange und ein Sitz als zwei getrennte Elemente montiert werden. Der Sitz ist nicht von einer Stellung zur Verwendung als Sitz in eine Verwahrungsstellung überführbar.

EP2476607, zu welchem Dokument US4941670 und FR2467003 als Stand der Technik genannt sind, offenbart eine Befestigung eines Sitzes mittels eines Befestigungselementes im Unterschied zu US4941670 in der Form, dass das Befestigungselement die Haltestange ummantelt. EP2476607 offenbart keine Umwandlung der als Element dienenden Haltestange zu einem Sitz.

Dokument US20150097346, welches die Präambel der unabhängigen Ansprüche zeigt, offenbart einen Tretroller umfassend ein an der Standfläche angelenktes Element, welches von einer ersten Stellung als Sitzelement in eine zweite Stellung als Haltelement überführbar ist. Allerdings ist bei dem in US20150097346 offenbarten Tretroller bei Verwendung des Elementes als Sitzelement die Fahrtrichtung umgekehrt zu jener Fahrtrichtung bei Verwendung des Elementes als Haltestange.

US6296568 offenbart einen Tretroller umfassend ein aufklappbares Sitzelement, wobei das aufgeklappte Sitzelement nicht als Haltestange, sondern als ein Verkleidungselement ohne eine erkennbare technische Wirkung für eine weitere Haltestange wirkt.

FR3018260, DE29612276, US2015068828, FR281808, CN104260808, WO2011098887, DE20214201, CN202201107 und US2010148460 erwähnen nicht die Verwendung des Sitzelementes als Haltestange.

US6089586A , welche die Prämable der unabhängigen Ansprüche 1 bis 5 offenbart, offenbart einen Tretroller, beim welchem ein als in einer ersten Stellung als Sitz und in einer zweiten Stellung als Haltestange dienendes Element um eine in einem rechten Winkel zu den Stellungen sich erstreckende Achse zwischen den Stellungen durch Drehen bewegbar ist. Der in US6089586A offenbarte Tretroller umfasst weiters keine Gewichtsverlagerungslenkung. US20150097346 offenbart einen Tretroller, der in Abhängigkeit der Stellung eines als Sitz oder als Haltestange dienenden Elementes bei Gebrauch in unterschiedliche Fahrtrichtungen zu bewegen ist. Das Element ist um eine Achse drehbar, welche Achse sich in einem rechten Winkel zu den Stellungen erstreckt. Der Tretroller umfasst weiters keine Lenkung. USD631102 zeigt einen Tretroller mit einem als Sitz oder Haltestange dienenden Element, das über ein Gelenk mit einer in einem rechten Winkel zu den Stellungen stehenden Achse im Chassis drehbar angeschlossen ist. Der Tretroller umfasst weiters keine Lenkung.

Die Tretroller nach dem Stand der Technik weisen allesamt den Nachteil auf, dass die Tretroller in der Hauptsache nur für eine Körperhaltung einer Person konzipiert sind. Ein Umwandeln der Tretroller nach dem Stand der Technik zur Benutzung in einer weiteren Körperhaltung ist nur beschränkt und mit Nachteilen behaftet möglich.

Nichtverwendete Teile wie ein Sitz sind bei Tretrollern nach dem Stand der Technik störend. Beispielsweise stört der Sitz - sofern der Sitz nicht abgenommen wird - die auf der Stehfläche stehende Person.

Sofern ein Umwandeln eines für eine stehende Haltung der Person geeigneten Tretrollers zu einem für eine sitzende Haltung der Person geeigneten Tretrollers möglich ist, geschieht dies nur unter einem großen Aufwand. Es müssen hierzu Teile demontiert werden, welche bei Nichtverwenden nicht am Tretroller verstaut werden können.

Die hier offenbarte Erfindung stellt sich somit die Aufgabe, die für eine Benutzung eines Tretrollers in sitzender Haltung oder stehender Haltung benötigten Elemente auf ein Minimum zu reduzieren und die verbleibenden Elemente für beide Körperhaltungen nutzbar zu machen oder die nicht benötigte Elemente zu verstauen.

Erfindungsgemäß wird dies dadurch erreicht, dass der Tretroller weiters ein an der Stehfläche über ein Gelenk und/oder über ein elastisch und gegebenenfalls plastisch deformierbares Kopplungselement angelenktes oder ansteckbares Element umfasst, welches Element von einer ersten Stellung als Sitzelement zu einer zweiten Stellung als Haltestange für eine auf der Stehfläche stehende Person, wobei der Tretroller bei einer ersten Stellung des Elementes und bei einer zweiten Stellung des Elementes im Gebrauchsfall in die gleiche Fahrtrichtung bewegbar ist, überführbar ist.

Die Person kann das Element vor dessen Verwendung als Sitzelement (erste Stellung) oder als Haltestange (zweite Stellung) in die jeweilige Stellung bringen.

Das deformierbare Kopplungselement kann beispielsweise als elastisch deformierbares Kopplungselement in Form einer Feder oder eines Gummielementes ausgebildet sein. Das Gelenk und/oder das deformierbare Kopplungselement, insbesondere ein elastisch deformierbares Kopplungselement können in der ersten Stellung und/oder in der zweiten Stellung und/oder in einer weiteren Stellung zwischen der ersten Stellung und der zweiten Stellung arretierbar sein. Der Fachmann verwendet hierzu Arretiervorrichtungen wie beispielsweise Sperrvorrichtungen, Schnappvorrichtungen, Rastvorrichtungen oder Klemmvorrichtungen nach dem Stand der Technik. Das Gelenk kann beispielsweise als Rastgelenk ausgebildet sein.

Die gleichen Fahrtrichtungen bei unterschiedlichen Stellungen des Elementes bewirken - insbesondere Tretrollern mit einer Lenkung - ähnliche Fahreigenschaften und eine leichte Bedienbarkeit. Die Fahreigenschaften werden nur geringfügig durch eine geänderte Situierung des gemeinsamen Schwerpunktes von Person und Tretroller bei den unterschiedlichen Stellungen verändert.

Das Element kann in der ersten Stellung und/oder in der zweiten Stellung in unterschiedlichen Höhenpositionen angelenkt oder ansteckbar sein.

Das Element kann weiters vorteilhaft von der ersten Stellung oder der zweiten Stellung in eine Verwahrstellung überführt werden.

In der Verwahrstellung hindert das Element nicht die Person, auf der Stehfläche zu sitzen oder zu stehen.

Das Element kann im Rahmen dieser Erfindung direkt oder indirekt, d.h. über weitere in dieser Offenbarung angeführte oder nicht angeführte Elemente mit der Stehfläche durch eine mechanische Verbindung wie beispielsweise ein Gelenk oder eine Steckverbindung gekoppelt sein.

Die die Stehfläche und das Element verbindende mechanische Steckverbindung kann so ausgeführt sein, dass in erster Stellung oder zweiter Stellung die durch ein Gelenk oder durch ein Stecksystem geschaffene mechanische Verbindung zwischen dem Element und der Stehfläche gelöst werden kann, sodass das Element durch eine freie oder durch eine durch die mechanische Verbindung vorgegebene Bewegung von der einen Stellung in die andere Stellung überführbar ist, sodass das Element in der anderen Stellung abschließend mit der Stehfläche mechanisch verbunden ist.

Die mechanische Verbindung kann somit nur die erste Stellung und die zweite Stellung des Elementes vorgeben. Die hier offenbarte Erfindung ist nicht darauf beschränkt, dass die Bewegung des Elementes von der einen Stellung in die andere Stellung vorgegeben sein muss.

Das Gelenk, welches eine Anlenkung des Elementes mit der Stehfläche gewährleisten kann, kann eine Sperrvorrichtung umfassen, sodass das Element in der ersten Stellung oder in der zweiten Stellung arretiert ist.

Das Element kann als ein sich entlang einer Elementlängsachse erstreckendes, längliches Element ausgeformt sein. Die vom Fachmann zu wählende Länge des Elementes muss in der ersten Stellung hinreichend lang sein, sodass die Person auf dem Sitzelement sitzen kann. In der zweiten, vertikalen Stellung bei seiner Verwendung als Haltestange ist das Element hinreichend lang, um eine ausreichende Höhe zu erreichen, sodass die auf der Stehfläche stehende Person bequem das Element als Haltestange greifen kann.

Das Element kann einen Stauraum umfassen.

Das Element kann sich in der ersten Stellung im Wesentlichen horizontal und/oder in der zweiten Stellung im Wesentlichen vertikal erstrecken.

Der erfindungsgemäße Tretroller kann eine Lenkvorrichtung umfassen, welche mit der Stehfläche verbunden ist und an welcher Lenkvorrichtung jeweils zumindest ein Vorderrad und/oder ein Hinterrad angelenkt ist. Die Betätigung der Lenkvorrichtung kann über die Stehfläche erfolgen.

Die Lenkvorrichtung kann das Element umfassen. Das Element ist hierzu über die Lenkvorrichtung an der Stehfläche angelenkt oder angesteckt ist, sodass das Element eine Wirkung auf die Lenkvorrichtung hat.

In seiner Stellung als Haltestange weist das Element eine im Wesentlichen vertikale Stellung auf. Die auf der Stehfläche stehende Person kann sich mit ihren Händen an der Haltestange anhalten und mit Hilfe der Haltestange und auch über die Stehfläche die Lenkung betätigen. Die Person kann mit ihren Füßen den Tretroller beschleunigen.

In seiner Stellung als Sitzelement nimmt hingegen das Element eine im Wesentlichen horizontale Stellung ein. Die Person kann auf dem Sitzelement sitzen und mit ihren Füßen den Tretroller antreiben. Es kann der Person auch erlaubt sein - sofern die Lenkfunktion nicht gesperrt ist -, über das Sitzelement die Lenkvorrichtung zu betätigen.

Das Überführen des Elementes von einer ersten Stellung als Sitzfläche in eine zweite Stellung als Haltestange ist im Wesentlichen - unter Vernachlässigung weiterer Bewegungen - eine Drehung des Elementes von einer horizontalen Stellung in eine vertikale Stellung. Aus diesem Grund ist es sinnvoll, dass das angelenkte Element um eine Elementdrehachse drehbar gelagert ist.

Die Elementdrehachse kann rechtwinkelig zu der Elementlängsachse stehen. Das Element wird in der Längsrichtung des Tretrollers von der einen Stellung in die zweite Stellung gedreht.

Die Elementdrehachse kann die Winkelhalbierende zwischen der ersten Stellung und der zweiten Stellung sein. Das Element wird durch eine Drehung aus der Längsrichtung des Tretrollers von der einen Stellung in die zweite Stellung gedreht.

Das Element kann über die Stehfläche mit der Lenkvorrichtung verbunden sein.

Es kann ein Halteelement an dem Element und/oder an der Stehfläche angebracht sein, dass dem Benutzer eine weitere Möglichkeit zum Anhalten bietet. Vorzugsweise umfasst die Lenkvorrichtung Aufnahmen zum Anbringen des weiteren Halteelementes in der ersten Stellung und des Elementes in der zweiten Stellung.

Das weitere Halteelement kann sich durch das Element erstrecken. Das Element kann hierbei zur Ableitung der auf das Element wirkenden Kräfte in das Element oder über die Stehfläche in das Element mit dem weiteren Halteelement formschlüssig ausgebildet sein.

Der erfindungsgemäße Tretroller kann eine Gewichtsverlagerungslenkung und/oder eine Drehlenkung umfassen. Weiters kann der Tretroller eine Reibungsbremse umfassen, wobei eine Reibfläche gegen ein Rad, vorzugsweise das Hinterrad, gepresst wird. Das Vorsehen einer Lenkung bei dem erfindungsgemäßen Tretroller setzt voraus, dass - insbesondere bei einer Gewichtsverlagerungslenkung - die Fahrtrichtung nicht verändert wird. Die Lenkung wäre ansonsten nicht bedienbar.

Die nachfolgende Figurenbeschreibung dient der Veranschaulichung von Ausführungsformen des erfindungsgemäßen Tretrollers. Die Figuren sowie die Figurenbeschreibungen sind keinesfalls einschränkend zu sehen. Der Fachmann ist in der Lage, Merkmale der folgenden Figurenbeschreibung mit obiger allgemeiner Beschreibung zu verbinden. Der Fachmann ist insbesondere in der Lage, die in den Figuren und in der Figurenbeschreibung beispielhaft erwähnte Gewichtsverlagerungslenkung durch eine Drehlenkung zu ersetzen.

In den Figuren kennzeichnen die folgenden Bezugszeichen die nachstehenden Elemente des erfindungsgemäßen Tretrollers. Es ist in den Figuren die auf dem Tretroller befindliche Peron nicht eingetragen.
- 1: Stehfläche
- 2: Hinterrad
- 3: Vorderrad
- 4: Lenkvorrichtung
- 5: Element
- 6: erste Stellung (des Elementes)
- 7: zweite Stellung (des Elementes)
- 8: Elementdrehachse
- 9: Halteelement
- 10: erster Elementteil
- 11: zweiter Elementteil
- 12: Sitzfläche
- 13: Gelenkfläche
- 14: Belastung
- 15: Gelenk
- 16: Konsole
- 17: erste Konsolenaufnahme
- 18: zweite Konsolenaufnahme
- 19: weitere Gelenke
- 20: Fahrtrichtung

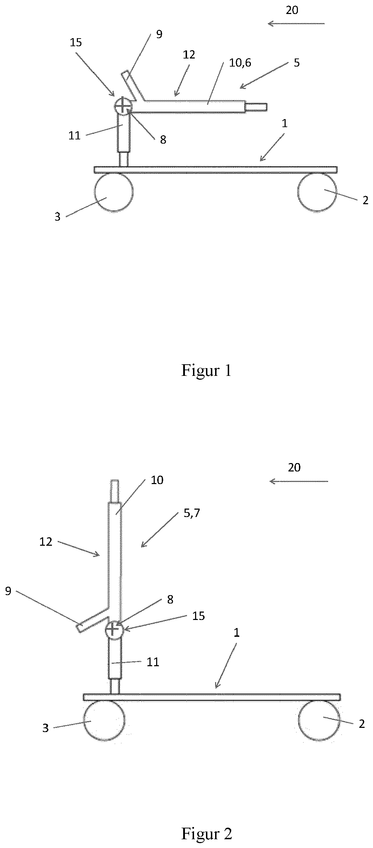

Figur 1 bis Figur 18 zeigen Seitenansichten von Ausführungsform des Tretrollers, wobei die Figuren mit einer ungeraden Nummer das Element in einer ersten Stellung und die Figuren mit einer geraden Nummer das Element in einer zweiten Stellung zeigen.

Figur 1 und Figur 2 zeigen Seitenansichten einer Ausführungsform des Tretrollers ohne Lenkvorrichtung. Der Tretroller der ersten Ausführungsform umfasst eine Stehfläche 1 zum Einnehmen einer stehenden Haltung oder auch sitzenden Haltung durch eine Person. Es sind ein an der Stehfläche 1 eine Hinterrad 2 und zwei Vorderräder 3 angelenkt. Der Tretroller umfasst weiters ein an die Stehfläche 1 angebrachtes Element 5, welches von einer ersten, im Wesentlichen horizontalen Stellung 6 als Sitzelement (siehe Figur 1) in eine zweite, im Wesentlichen vertikale Stellung 7 als Haltestange überführbar ist. Das Element 5 umfasst hierzu einen ersten Elementteil 10 und einen zweiten Elementteil 11, wobei der zweite Elementteil 11 mit einem Ende mit der Stehfläche 1 starr und mit dem anderen Ende über ein Gelenk 15 mit dem ersten Elementteil 10 verbunden ist. Es kann das erste Elementteil 10 relativ zu dem zweiten Elementteil 11 um die Elementdrehachse 8 verdreht werden. Die Elementdrehachse 8 verläuft rechtwinkelig zu der Bildebene der Figur 1 und Figur 2.

Der erste Elementteil 10 umfasst eine Sitzfläche 12, auf welcher die Person sitzen kann. Die Sitzfläche hat nur in der ersten Stellung 6 eine Funktion. In der zweiten Stellung 7 hat die Sitzfläche 12 keine Funktion. Der Tretroller umfasst weites ein Halteelement 9, an welchem sich die auf der Sitzfläche 12 sitzende Person anhalten kann. Das Halteelement 9 hat in der zweiten Stellung 7 keine Funktion.

Der in Figur 1 und Figur 2 gezeigte Tretroller umfasst keine Lenkvorrichtung; das Hinterrad 2 und die Vorderräder 3 sind um ihre Achsen drehbar, jedoch nicht zum Lenken des Tretrollers stellbar gelagert.

Figur 3 und Figur 4 zeigen Seitenansichten einer Ausführungsform des erfindungsgemäßen Tretrollers, wobei Figur 3 den erfindungsgemäßen Tretroller umfassend ein Element 5 in seiner ersten Stellung als Sitzelement und Figur 4 den erfindungsgemäßen Tretroller umfassend das Element 5 in seiner zweiten Stellung als Haltestange zeigt.

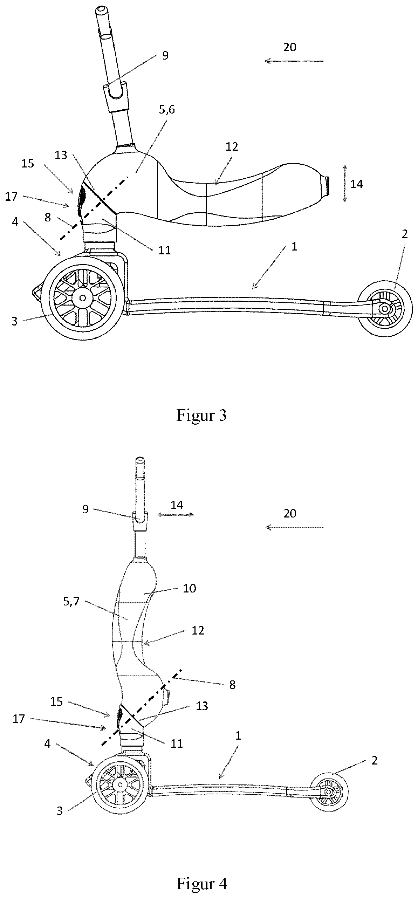

Der in Figur 3 und Figur 4 gezeigte Tretroller umfasst eine Stehfläche 1 zum Einnehmen einer stehenden Haltung durch eine Person, ein an die Stehfläche 1 angelenktes Hinterrad und zumindest ein über eine Lenkvorrichtung 4 angelenktes Vorderrad 3. In Figur 3 und Figur 4 ist die eine Gewichtsverlagerungslenkung umfassende Lenkvorrichtung 4 durch das Vorderrad 3 teilweise verdeckt.

Der erfindungsgemäße Tretroller umfasst weiters ein an der Lenkvorrichtung 4 ansteckbares Element 5, welches Element 5 in Figur 3 in seiner ersten Stellung 6 als Sitzelement dargestellt ist. Figur 4 zeigt die zweite Stellung 7 des Elementes 5 als Haltestange. Die erste Stellung 6 ist im Wesentlichen horizontal, während die zweite Stellung 7 im Wesentlichen vertikal ist.

Die Lenkvorrichtung 4 ist mit der Stehfläche 1 verbunden, sodass das Element 5 über die Lenkvorrichtung mit der Stehfläche 1 ansteckbar verbunden ist.

Das angelenkte Element 5 umfasst einen ersten Elementteil 10 und einen zweiten Elementteil 11, wobei der erste Elementteil 10 mit dem zweiten Elementteil 11 durch ein Gelenk 15 um eine Elementdrehachse 8 drehbar gelagert verbunden ist. Der erste Elementteil 10 ist von einer ersten horizontalen Stellung 6 in eine zweite vertikale Stellung 7 schwenkbar. Der zweite Elementteil 11 ist im Wesentlichen vertikal in der Lenkvorrichtung 4 hinsichtlich einer Bewegung fixiert und schafft durch seine Länge beziehungsweise Höhe in der ersten Stellung 6 eine für die Person bequeme Sitzhöhe. In der zweiten Stellung schaffen das erste Elementteil 10 und das zweite Elementteil 11 gemeinsam eine für die auf der Stehfläche 1 stehende Person bequeme Haltehöhe. Der erste Elementteil 10 und der zweite Elementteil 11 sind durch das Gelenk 15 miteinander verbunden.

Der erste Elementteil 10 umfasst eine zum bequemen Sitzen der Person ausgeformte Sitzfläche 12. Die Sitzfläche 12 hat nur in der ersten Stellung 6 diese technische Funktion; in der zweiten Stellung hat die Sitzfläche 12 keine technische Funktion.

Der erste Elementteil 10 und der zweite Elementteil 11 kontaktieren einander an einer Gelenkfläche 13, die in Figur 3 und Figur 4 als Linie eingetragen ist. Die Gelenkfläche 13 erstreckt sich normal zu der Elementachse 8. So können etwaige beispielhaft in Figur 3 und Figur 4 eingetragene Belastungen 13 auf das Element 5 durch die auf dem Tretroller verharrende Person besser im Gelenk 15 aufgenommen werden.

Das Gelenk 15 umfasst eine Sperrvorrichtung, sodass ein ungewolltes Schwenken des Elementes 5 von der einer Stellung in die andere Stellung unterbunden werden kann.

Die Elementdrehachse 8 ist Winkelhalbierende zwischen der ersten Stellung 6 und der zweiten Stellung 7. Die Elementdrehachse 8 ist 45° zu der Horizontalen und der Vertikalen geneigt.

Der Tretroller umfasst ein Halteelement 9, welches in der ersten Stellung 6 und in der zweiten Stellung 7 durch Aufnahmen am Element 5 angebracht ist.

Das weitere Halteelement 9 dient bei der ersten Stellung 6 zum Anhalten der auf dem Element 5 sitzenden Person. Das weitere Halteelement 9 ist höhenverstellbar über die Aufnahme mit dem Element 5 verbunden, sodass die sitzende Person die Höhe des weiteren Halteelementes 9 an ihre Bedürfnisse anpassen kann. Die sitzende Person betätigt die durch Gewichtsverlagerung arbeitende Lenkvorrichtung 4 durch Gewichtsverlagerung im Sitzen auf die Sitzfläche 12 und/oder durch Ausüben einer zur Seite gerichteten Kraft (in Figur 3 normal zur Figurebene).

In der zweiten Stellung wird die Höhe zum Anhalten durch das Element 5 und das weitere Halteelement 9 geschaffen. Auch hier ist das weitere Halteelement 9 höhenverstellbar. Die stehende Person betätigt die durch Gewichtsverlagerung arbeitende Lenkvorrichtung durch Gewichtsverlagerung auf die Stehfläche 1 und/oder durch Ausüben einer seitlichen Kraft (in Figur 4 normal zur Figurebene).

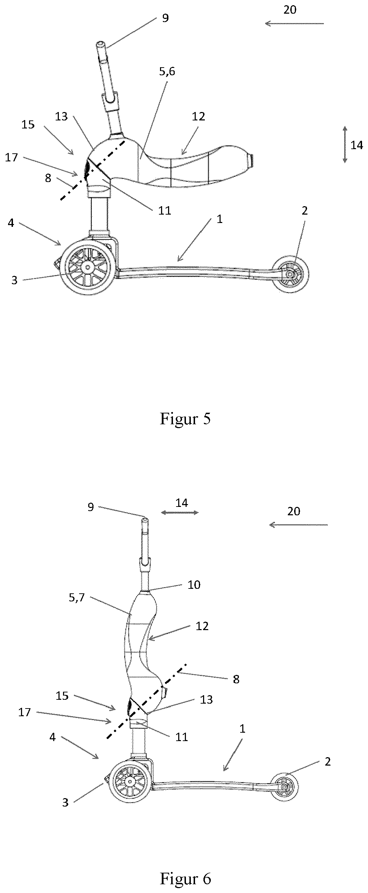

Figur 5 und Figur 6 veranschaulichen die Höhenverstellbarkeit des Elementes 5 bei dem in Figur 3 und Figur 4 gezeigten Tretroller. Das Element 5 umfasst eine erste Konsolenaufnahme 17, über welche die Höhe des Elementes 5 in der ersten Stellung 6 (Figur 5) und in der zweiten Stellung 7 (Figur 6) zu der Stehfläche 1 gewählt werden kann.

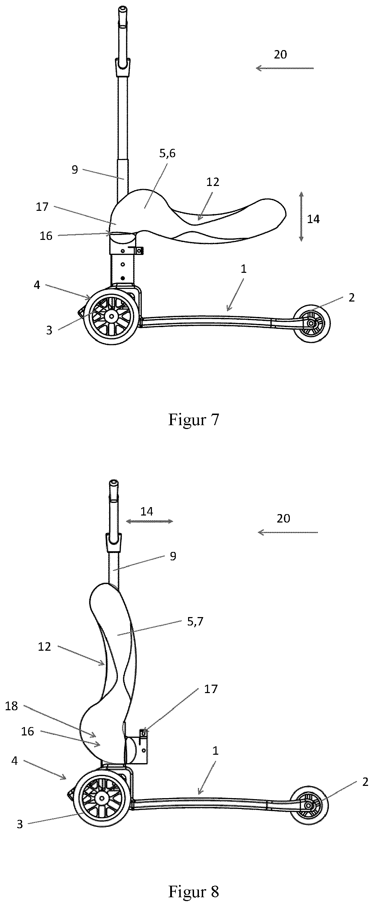

Figur 7 und Figur 8 zeigen Seitenansichten einer Ausführungsform des erfindungsgemäßen Tretrollers. Figur 7 zeigt den Tretroller umfassend ein Element 5 in einer ersten horizontalen Stellung 5 als Sitzelement; Figur 8 zeigt den Tretroller umfassend das Element 5 in einer zweiten vertikalen Stellung 6 als Halteelement.

Der Tretroller umfasst wiederum eine Stehfläche 1 mit einem angelenkten Hinterrad 2, ein an einer Lenkvorrichtung 4 angelenktes Vorderrad 3, wobei Stehfläche 1 und Lenkvorrichtung 4 mechanisch verbunden sind. Die als Gewichtsverlagerungslenkung arbeitende Lenkvorrichtung 4 ist wiederum teilweise durch das Vorderrad 3 verdeckt.

Figur 7 zeigt weiters ein an eine Konsole 16, welche einstückig mit der Stehfläche 1 ausgebildet ist, ansteckbares Element 5 in seiner ersten Stellung 6 als Sitzelement. Das Element 5 umfasst eine dazu passende erste Konsolenaufnahme 17, welche auf die Konsole 16 aufgesteckt wird. Die erste Konsolenaufnahme 17 umfasst weiters ein Spannelement zum sicheren Anbringen des Elementes 5 an der Konsole 16 in der ersten Stellung 6, wobei die Höhenposition des Elementes 5 in der ersten Stellung 6 durch das Spannelement stellbar ist. Das Element 5 erstreckt sich horizontal und bietet einer sitzenden Person eine Sitzfläche 12 zum bequemen Sitzen.

Figur 8 zeigt, dass das Element 5 auch in seiner zweiten Stellung 7 als Haltestange auf die Konsole 16 ansteckbar ist. Das Element 5 umfasst hierzu eine zweite Konsolenaufnahme 18, welche ein Aufstecken des Elementes 5 auf die Konsole 16 in der zweiten vertikalen Stellung 7 gestattet. Die erste Konsolenaufnahme 17 und die zweite Konsolenaufnahme 18 sowie die Konsole 16 werden vom Fachmann zur Aufnahme der wesentlichen Belastungen 18 dimensioniert.

Durch die Ansteckbarkeit des Elementes 5 in einer ersten horizontalen Stellung 6 (siehe Figur 7) und in einer zweiten vertikalen Stellung 7 (siehe Figur 8) ist das Element von einer Verwendung als Sitzelement zu einer Verwendung als Haltestange überführbar.

In Figur 7 ist die zweite Konsolenaufnahme 18 und in Figur 8 die erste Konsolenaufnahme 17 ohne Verwendung. Ebenso ist die Sitzfläche 12 bei der zweiten Stellung 7 ohne Verwendung.

Der in Figur 7 und Figur 8 gezeigte Tretroller umfasst ein Halteelement 9, welches an die Stehfläche 1 anbringbar ist. Die erste Konsolenaufnahme 17 und die zweite Konsolenaufnahme 18 erstrecken sich hierzu durch das Element 5, sodass das weitere Halteelement 9 durch das Element 5 in die Konsole 16 geschoben, somit gesteckt werden kann. Die erste Konsolenaufnahme 17 und die zweite Konsolenaufnahme 18 erstrecken sich - in Figur 7 und Figur 8 nicht sichtbar - durch das Element sind.

Das Halteelement 9 dient bei der ersten Stellung 6 zum Anhalten der auf dem Element 5 sitzenden Person. Das weitere Halteelement 9 ist höhenverstellbar über die Aufnahme mit dem Element 5 verbunden, sodass die sitzende Person die Höhe des weiteren Halteelementes 9 an ihre Bedürfnisse anpassen kann. Die sitzende Person betätigt die durch Gewichtsverlagerung arbeitende Lenkvorrichtung 4 durch Gewichtsverlagerung im Sitzen auf die Sitzfläche 12 und/oder durch Ausüben einer zur Seite gerichteten Kraft (in Figur 3 normal zur Figurebene).

In der zweiten Stellung wird die Höhe zum Anhalten durch das Element 5 und das Halteelement 9 geschaffen. Auch hier ist das weitere Halteelement 9 höhenverstellbar. Die stehende Person betätigt die durch Gewichtsverlagerung arbeitende Lenkvorrichtung durch Gewichtsverlagerung auf die Stehfläche 1 und/oder durch Ausüben einer seitlichen Kraft (in Figur 4 normal zur Figurebene).

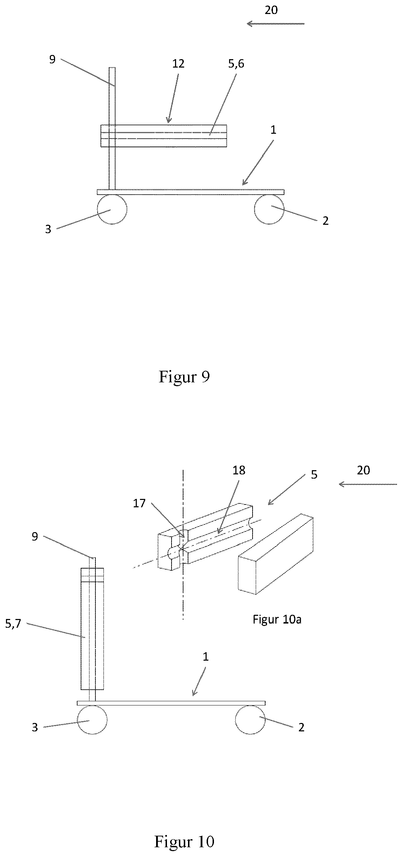

Figur 9 und Figur 10 zeigten eine Seitenansicht eines Tretrollers nach dem Stand der Technik umfassend eine Stehfläche 1 für eine Person, ein an der Stehfläche 1 angelenktes Hinterrad 2 und zwei Vorderräder 3.

Der Tretroller umfasst weiters ein Halteelement 9, welches Halteelement 9 mit der Stehfläche 1 verbunden ist.

Der erfindungsgemäße Tretroller umfasst weiters ein Element 5, welches eine Sitzfläche 12 umfasst. Das Element 5 kann in einer ersten, im Wesentlichen horizontalen Stellung 6 (siehe Figur 9) oder in einer zweiten, im Wesentlichen vertikalen Stellung 7 (siehe Figur 10) am Halteelement 9 das Halteelement 9 ummantelnd angeschlossen werden.

Die in Figur 10 enthaltene Figur 10a zeigt das Element 5 im Detail. Das Element 5 umfasst zwei Teile, welche zum Anstecken des Elementes 5 an das Halteelement 9 zusammengefügt werden. Ein Teil des Elementes 5 umfasst eine erste Konsolenaufnahme 17 und eine zweite Konsolenaufnahme 18. Die ersten Konsolenaufnahme 17 dient zur Aufnahme des Halteelementes 9, sodass das Element 5 die erste Stellung 6 einnimmt (siehe Figur 9). Die zweite Konsolenaufnahme 18 dient zur Aufnahme des Halteelementes 9 in zweiten Stellung 7 (siehe Figur 10).

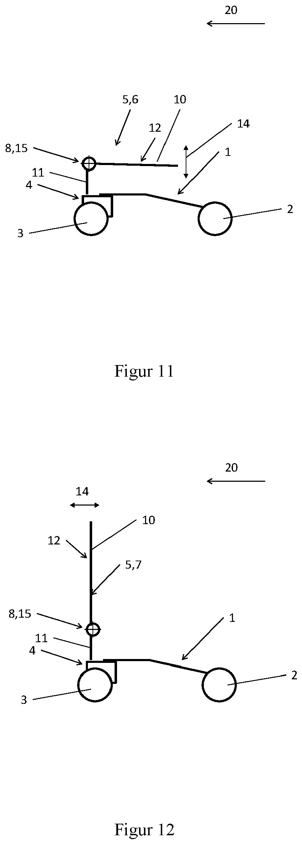

Figur 11 und Figur 12 zeigen Seitenansichten einer Ausführungsform des Tretrollers, wobei Figur 3 den erfindungsgemäßen Tretroller umfassend ein Element 5 in seiner ersten Stellung als Sitzelement und Figur 4 den erfindungsgemäßen Tretroller umfassend das Element 5 in seiner zweiten Stellung als Haltestange zeigt.

Der in Figur 11 und Figur 12 gezeigte Tretroller umfasst eine Stehfläche 1 zum Einnehmen einer stehenden Haltung durch eine nicht dargestellte Person, ein an die Stehfläche 1 angelenktes Hinterrad und zumindest ein über eine Lenkvorrichtung 4 angelenktes Vorderrad 3. In Figur 11 und Figur 12 ist die eine Gewichtsverlagerungslenkung umfassende Lenkvorrichtung 4 durch das Vorderrad 3 teilweise verdeckt.

Der Tretroller umfasst weiters ein an der Lenkvorrichtung 4 ansteckbares Element 5, welches Element 5 in Figur 11 in seiner ersten Stellung 6 als Sitzelement dargestellt ist. Figur 12 zeigt die zweite Stellung 7 des Elementes 5 als Haltestange. Die erste Stellung 6 ist im Wesentlichen horizontal, während die zweite Stellung 7 im Wesentlichen vertikal ist.

Die Lenkvorrichtung 4 ist mit der Stehfläche 1 verbunden, sodass das Element 5 über die Lenkvorrichtung mit der Stehfläche 1 verbunden ist.

Das angelenkte Element 5 umfasst einen ersten Elementteil 10 und einen zweiten Elementteil 11, wobei der erste Elementteil 10 mit dem zweiten Elementteil 11 durch ein Gelenk 15 um eine rechtwinkelig zur Bildebene der Figur 11 und der Figur 12 orientieren Elementdrehachse 8 drehbar gelagert verbunden ist. Der erste Elementteil 10 ist von einer ersten horizontalen Stellung 6 in eine zweite vertikale Stellung 7 schwenkbar. Der zweite Elementteil 11 ist im Wesentlichen vertikal fixiert und schafft durch seine Länge beziehungsweise Höhe in der ersten Stellung 6 eine für die Person bequeme Sitzhöhe. In der zweiten Stellung schaffen der erste Elementteil 10 und der zweite Elementteil 11 gemeinsam eine für die auf der Stehfläche 1 stehende Person bequeme Haltehöhe. Der erste Elementteil 10 und der zweite Elementteil 11 sind durch das Gelenk 15 miteinander verbunden.

Der erste Elementteil 10 umfasst eine zum bequemen Sitzen der Person ausgeformte Sitzfläche 12. Die Sitzfläche 12 hat nur in der ersten Stellung 6 diese technische Funktion; in der zweiten Stellung hat die Sitzfläche 12 keine technische Funktion.

Das Gelenk 15 umfasst eine Sperrvorrichtung, sodass ein ungewolltes Schwenken des Elementes 5 von der einer Stellung in die andere Stellung unterbunden werden kann.

Der Tretroller umfasst ein Halteelement 9, welches in der ersten Stellung 6 und in der zweiten Stellung 7 durch Aufnahmen am Element 5 angebracht ist.

Das weitere Halteelement 9 dient bei der ersten Stellung 6 zum Anhalten der auf dem Element 5 sitzenden Person. Das weitere Halteelement 9 ist höhenverstellbar über die Aufnahme mit dem Element 5 verbunden, sodass die sitzende Person die Höhe des weiteren Halteelementes 9 an ihre Bedürfnisse anpassen kann. Die sitzende Person betätigt die durch Gewichtsverlagerung arbeitende Lenkvorrichtung 4 durch Gewichtsverlagerung im Sitzen auf die Sitzfläche 12 und/oder durch Ausüben einer zur Seite gerichteten Kraft (in Figur 3 normal zur Figurebene).

In der zweiten Stellung wird die Höhe zum Anhalten durch das Element 5 und das weitere Halteelement 9 geschaffen. Auch hier ist das weitere Halteelement 9 höhenverstellbar. Die stehende Person betätigt die durch Gewichtsverlagerung arbeitende Lenkvorrichtung durch Gewichtsverlagerung auf die Stehfläche 1 und/oder durch Ausüben einer seitlichen Kraft (in Figur 4 normal zur Figurebene).

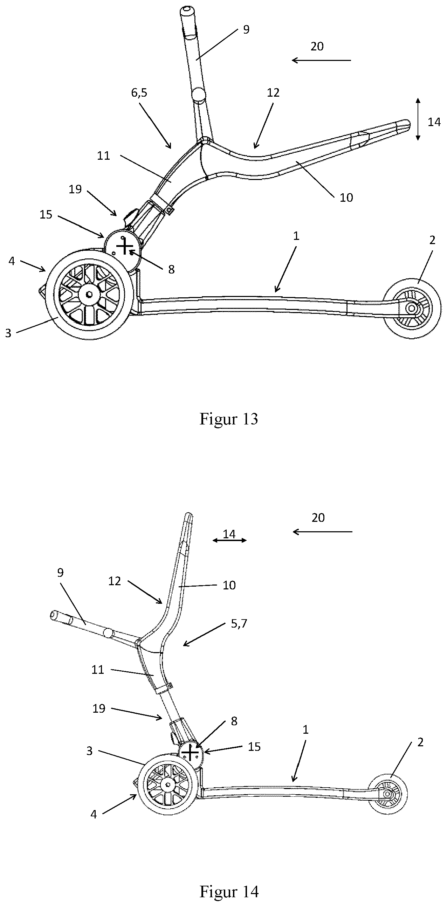

Figur 13 und Figur 14 zeigen Seitenansichten einer Ausführungsform des Tretrollers, welcher eine Stehfläche 1 zum Einnehmen einer stehenden Haltung durch eine in Figur 13 und Figur 14 nicht gezeigten Person, ein an die Stehfläche 1 angelenktes Hinterrad 2 und zwei an die Stehfläche 1 über eine Lenkvorrichtung 4 angelenktes Vorderrad 3 umfasst.

Der Tretroller umfasst weiters ein an der Stehfläche 1 über ein Gelenk 15 angelenktes Element 5. Das Gelenk 15 läßt hierbei eine Drehung des Elementes 5 um eine Stabdrehachse 8 zu, welche Stabdrehachse 8 rechtwinkelig auf die Bildebene der Figur 13 und der Figur 14 gerichtet ist.

Das Element 5 umfasst einen ersten Elementteil 10 und einen zweiten Elementteil 11. Der zweite Elementteil 11 ist mit seinem einem Ende am Gelenk 15 und mit seinem anderen Ende am ersten Elementteil 10 angeschlossen, wobei zwischen ersten Elementteil 10 und zweiten Elementteil 11 eine starre Verbindung besteht. Der erste Elementteil 10 und der zweite Elementteil 11 weisen einen Winkel von circa 20° zueinander auf.

Figur 13 zeigt eine erste Stellung 6 des Elementes 5, in welcher ersten Stellung das erste Elementteil 10 als Sitz dient. Das erste Elementteil 10 umfasst eine Sitzfläche 12, um der Person ein bequemes Sitzen zu erlauben. Das Gelenk 15 umfasst eine Sperrvorrichtung, um eine Drehung des Elementes 5 zu unterbinden, sodass das Element 5 durch eine sitzende Person belastbar ist.

Figur 14 zeigt eine zweite Stellung 7 des Elementes 5, in welche zweite Stellung 7 das Element 5 nach vorhergegangenem Lösen der Sperrvorrichtung überführbar ist. In seiner zweiten Stellung 7 dient das Element 5 als Haltestange. Das Element 5 ist in seiner zweiten Stellung 7 im Wesentlichen vertikal, wobei der erste Elementteil 10 und der zweite Elementteil 11 wegen der starren, zueinander gewinkelten Verbindung von der Vertikalen geringfügig abweichen.

Bei der ersten Stellung 6 sitzt die Person auf dem ersten Elementteil 10 und haltet sich mit ihren Händen an dem am Element 5 angebrachten Halteelement 9 an. Die Person kann mit ihren Füßen den Tretroller beschleunigen, da die Person sitzend mit ihren Füßen den Boden erreicht. Es kann hierbei die Sitzhöhe durch das Gelenk 15 über die Neigung des Elementes 5 eingestellt werden. Hierzu alternativ oder in Kombination mit der Einstellung der Neigung kann die Sitzhöhe durch das Teleskop 19 eingestellt werden, als welches der zweite Elementteil 11 ausgebildet ist. Die Person lenkt den Tretroller durch Gewichtverlagerung auf der Sitzfläche 12 und über das Halteelement 9, welches die Person mit ihrem Händen haltet.

Bei der zweiten Stellung 7 steht die Person auf der Stehfläche 1 und haltet sich mit ihren Händen an dem Halteelement 9 an. Die Person kann mit ihren Füßen den Tretroller beschleunigen, da die Person mit ihren Füßen den Boden erreicht. Es kann hierbei die Höhe des Halteelementes 9 durch das Gelenk 15 über die Neigung des Elementes 5 eingestellt werden. Hierzu alternativ oder in Kombination mit der Einstellung der Neigung kann die Höhe des Halteelementes 9 durch das Teleskop 19 eingestellt werden, als welches der zweite Elementteil 11 ausgebildet ist. Die Person lenkt den Tretroller durch Gewichtverlagerung auf der Stehfläche 1 und über das Halteelement 9, welches die Person mit ihrem Händen haltet.

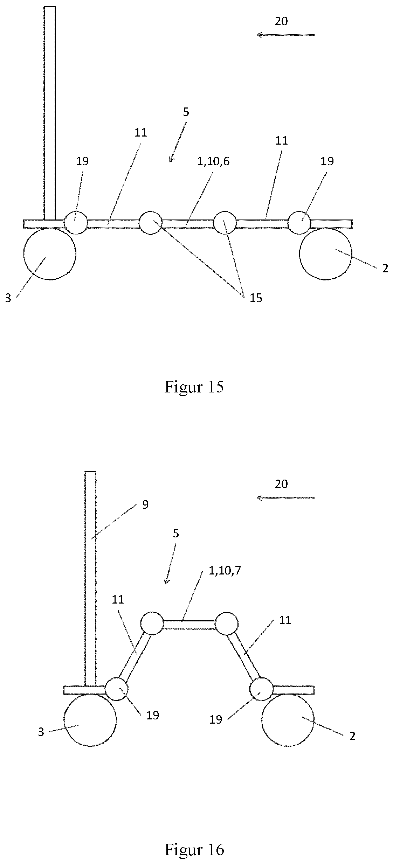

Figur 15 und Figur 16 zeigten eine schematische Seitenansicht einer Ausführungsform eines Tretrollers umfassend eine Stehfläche 1, ein an die Stehfläche 1 angelenktes Hinterrad 2 und ein an der Stehfläche 1 angelenktes Vorderrad 3.

Der Tretroller umfasst ein Element 5, welches einen ersten Elementteil 10 und zwei zweite Elementteile 11 umfasst. Der erste Elementteil 10 und die zweiten Elementteile 11 sind durch Gelenke 15 zueinander drehbar verbunden, sodass der erste Elementteil 10 von einer ersten Stellung 6 als Sitz (siehe Figur 16) in eine Verwahrungsposition (siehe Figur 15) überführbar ist. In der Verwahrungsposition bilden die Stehfläche 1, der erste Elementteil 10 und der zweite Elementteil 11 eine Ebene aus. Die auf dem Tretroller stehende Person kann im Prinzip auf der gesamten Ebene stehen.

Der erste Elementteil 10 und die Stehfläche 10 sind einstückig ausgebildet.

Der Fachmann ordnet die weiteren Gelenke 19 an, sodass die Überführung der Elemente 5 von der Verwahrstellung in die erste Stellung geometrisch möglich ist.

Der Tretroller umfasst weiters ein Halteelement 9, an welchem sich die auf der Stehfläche 1 stehende Person oder auf dem ersten Elementteil 10 sitzende Person anhalten kann.

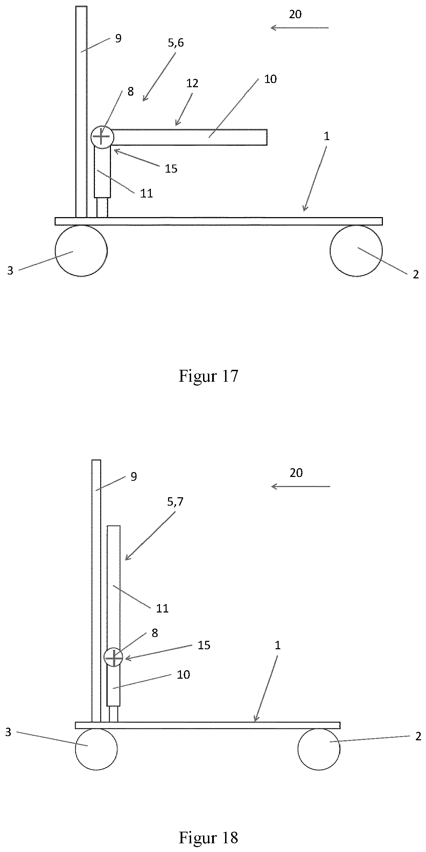

Figur 17 und Figur 18 zeigen eine schematische Ansicht eines Tretroller umfassend eine Stehfläche 1, in an die Stehfläche 1 angelenktes Hinterrad 2 und ein an die Stehfläche 1 angelenktes Vorderrad 3.

Der Tretroller umfasst weiters ein an der Stehfläche 1 angebrachtes Element 5, welches Element 5 einen ersten Elementteil 10 und einen zweiten Elementteil 11 umfasst. Die Elementteile 10,11 sind durch ein Gelenk 15 verbunden, sodass der erste Elementteil 10 zum zweiten Elementteil 11 durch Drehung um eine Elementachse 8 stellbar ist. Es ist somit das Element 5 von einer ersten Stellung 6 als Sitzelement (siehe Figur 17) zu einer zweiten Stellung 7 als Haltestange (siehe Figur 18) überführbar ist. Der erste Elementteil 10 umfasst eine Sitzfläche 12, um der Person ein bequemes Sitzen in der ersten Stellung 6 zu ermöglichen.

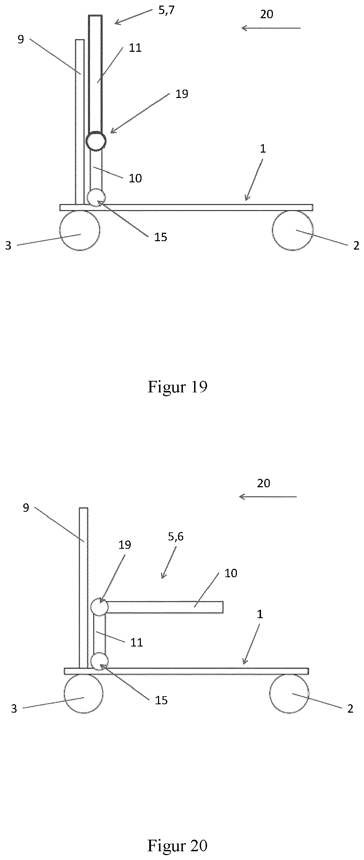

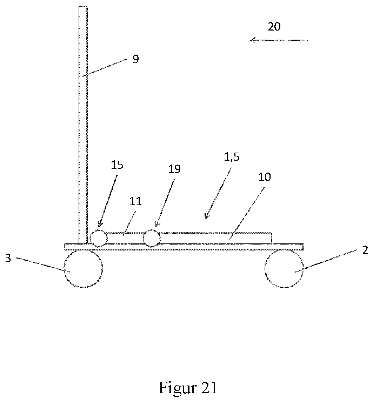

Figur 19, Figur 18 und Figur 21 zeigen Seitenansichten von einem Tretroller umfassend eine Stehfläche 1, zumindest ein an die Stehfläche 1 angelenktes Hinterrad 2 und zumindest ein an der Stehfläche 1 angelenktes Vorderrad 3. Es ist weiters an der Stehfläche 1 ein Element 5 über ein Gelenk 15 angelenkt, welches Element 5 einen ersten Elementteil 10 und einen zweiten Elementteil 11 umfasst. Die Elementteile 10, 11 sind durch ein weiteres Gelenk 19 verbunden. Es ist das Element 5 zwischen einer ersten Stellung 6 als eine Sitzfläche 12 umfassendes Sitzelement (siehe Figur 18) und einer zweiten Stellung 7 als Haltestange (siehe Figur 19) und einer Verwahrungsstellung (siehe Figur 21) überführbar. Das Element 5 weist in der Verwahrungsstellung eine an die Stehfläche 1 angepasste Form auf, sodass die Person sich auf das in der Verwahrungsstellung befindliche Element 5 stellen kann.

Die auf der Sitzfläche 12 sitzende oder auf der Stehfläche 1 stehende Person kann sich am weiteren Halteelement 9 anhalten.

## Patentansprüche

1. Tretroller umfassend
eine Stehfläche (1),
zumindest ein an die Stehfläche (1) angelenktes Hinterrad (2) und zumindest ein an der Stehfläche (1) angelenktes Vorderrad (3),
welcher Tretroller in eine Vorwärts-Fahrtrichtung (20) bewegbar ist,
wobei der Tretroller bei einem durch eine erste Stellung (6) eines Elementes (5) vorgegebenen Gebrauchsfall und bei einem durch eine zweite Stellung (7) des Elementes (5) vorgegebenen weiteren Gebrauchsfall in die gleiche Vorwärts-Fahrtrichtung (20) bewegbar ist,
wobei das Element (5) an der Stehfläche (1) über ein Gelenk (15) angelenkt ist, wobei das Element (5) von der ersten Stellung (6) als Sitzelement zu der zweiten Stellung (7) als Haltestange für eine auf der Stehfläche (1) stehende Person überführbar ist, **dadurch gekennzeichnet, dass**
das Element (5) nur um eine Elementdrehachse (8) schwenkbar gelagert ist, wobei die Elementdrehachse (8) die Winkelhalbierende zwischen der ersten Stellung (6) und der zweiten Stellung (7) des Elementes (5) ist.

2. Tretroller umfassend
eine Stehfläche (1),
zumindest ein an die Stehfläche (1) angelenktes Hinterrad (2) und zumindest ein an der Stehfläche (1) angelenktes Vorderrad (3),
welcher Tretroller in eine Vorwärts-Fahrtrichtung (20) bewegbar ist,
wobei der Tretroller weiters ein an der Stehfläche (1) angelenktes Element (5) umfasst und der Tretroller bei einem durch eine erste Stellung (6) des Elementes (5) vorgegebenen Gebrauchsfall und bei einem durch eine zweite Stellung (7) des Elementes (5) vorgegebenen weiteren Gebrauchsfall in die gleiche Vorwärts-Fahrtrichtung (20) bewegbar ist,
welches Element (5) von der ersten Stellung (6) als Sitzelement zu der zweiten Stellung (7) als Haltestange für eine auf der Stehfläche (1) stehende Person überführbar ist, **dadurch gekennzeichnet, dass**
das Element (5) über ein deformierbares Kopplungselement abgelenkt ist.

3. Tretroller umfassend
eine Stehfläche (1),
zumindest ein an die Stehfläche (1) angelenktes Hinterrad (2) und zumindest ein an der Stehfläche (1) angelenktes Vorderrad (3),
welcher Tretroller in eine Vorwärts-Fahrtrichtung bewegbar ist,
wobei ein Element (5) von einer ersten Stellung (6) als Sitzelement zu einer zweiten Stellung (7) als Haltestange für eine auf der Stehfläche (1) stehende Person überführbar ist,
wobei der Tretroller bei einem durch eine erste Stellung (6) des Elementes (5) vorgegebenen Gebrauchsfall und bei einem durch eine zweite Stellung (7) des Elementes (5) vorgegebenen weiteren Gebrauchsfall in die gleiche Vorwärts-Fahrtrichtung (20) bewegbar ist,
**dadurch gekennzeichnet, dass**
das Hinterrad (2) oder das Vorderrad (3) durch eine Gewichtsverlagerung lenkbar ist und
wobei die Gewichtsverlagerungslenkung weiters das an der Stehfläche (1) über ein Gelenk (15) und/oder über ein deformierbares Kopplungselement angelenktes Element (5) umfasst.

4. Tretroller umfassend
eine Stehfläche (1),
zumindest ein an die Stehfläche (1) angelenktes Hinterrad (2) und zumindest ein an der Stehfläche (1) angelenktes Vorderrad (3),
ein Halteelement (9), welches Halteelement (9) mit der Stehfläche (1) verbunden ist, welcher Tretroller in eine Vorwärts-Fahrtrichtung bewegbar ist,
wobei der Tretroller bei einem durch eine erste Stellung (6) eines Elementes (5) vorgegebenen Gebrauchsfall und bei einem durch eine zweite Stellung (7) des Elementes (5) vorgegebenen weiteren Gebrauchsfall in die gleiche Vorwärts-Fahrtrichtung (20) bewegbar ist,
**dadurch gekennzeichnet, dass**
das Element (5) an dem Halteelement (9) das Halteelement (9) sowohl in einer im Wesentlichen horizontalen Stellung als auch in einer im Wesentlichen vertikalen zweiten Stellung ummantelnd ansteckbar ist,
wobei das Element (5) zwei Elementteile umfasst, welche Elementteile zum Anstecken des Elementes (5) an das Halteelement (9) zusammengefügt werden, wobei ein Elementteil eine erste Konsolenaufnahme (17) zur Aufnahme des Halteelementes (9) in der ersten Stellung (6) des Elementes (5) und eine zweite Konsolenaufnahme (18) zur Aufnahme des Halteelementes (9) in der zweiten Stellung des Elementes (5) umfasst,
welches Element (5) von der ersten Stellung (6) als Sitzelement zu der zweiten Stellung (7) als Haltestange für eine auf der Stehfläche (1) stehende Person durch Lösen des Elementes (5) in der ersten Stellung vom Halteelement (9) und Anstecken des Elementes (5) in der zweiten Stellung an das Halteelement (9) überführbar ist.

5. Tretroller umfassend
eine Stehfläche (1),
zumindest ein an die Stehfläche (1) angelenktes Hinterrad (2) und zumindest ein an der Stehfläche (1) angelenktes Vorderrad (3),
ein Halteelement (9), welches Halteelement (9) mit der Stehfläche (1) verbunden ist, welcher Tretroller in eine Vorwärts-Fahrtrichtung bewegbar ist,
wobei der Tretroller bei einem durch eine erste Stellung (6) eines Elementes (5) vorgegebenen Gebrauchsfall und bei einem durch eine zweiten Stellung (7) des Elementes (5) vorgegebenen weiteren Gebrauchsfall in die gleiche Vorwärts-Fahrtrichtung (20) bewegbar ist,
welches Element (5) von einer ersten horizontalen Stellung (6) als Sitzelement zu einer zweiten Stellung (7) als Haltestange für eine auf der Stehfläche (1) stehende Person überführbar ist,
**dadurch gekennzeichnet, dass**
eine Konsole (16) einstückig mit der Stehfläche (1) ausgebildet ist, wobei das Element (5) eine erste Konsolenaufnahme (17) zum Aufstecken auf die Konsole (16) in der ersten Stellung (6) des Elementes (5) und eine zweite Konsolenaufnahme (18) zum Aufstecken auf die Konsole (16) in der zweiten vertikalen Stellung des Elementes (5) umfasst,
wobei die erste Konsolenaufnahme (17) ein Spannelement zum sicheren Anbringen des Elementes (5) an der Konsole in der ersten Stellung (6) umfasst,
wobei die Höhenposition des Elementes (5) in der ersten Stellung durch das Spannelement einstellbar ist.

6. Tretroller nach einem der Ansprüche 1 bis 5, **dadurch gekennzeichnet, dass** das Element (5) über weitere Elemente mit der Stehfläche durch eine mechanische Verbindung wie beispielsweise ein weiteres Gelenk oder eine Steckverbindung gekoppelt ist.

7. Tretroller nach Anspruch 6, **dadurch gekennzeichnet, dass**
in der ersten Stellung oder zweiten Stellung das Gelenk oder die Steckverbindung lösbar ist, sodass das Element durch eine durch das Gelenk oder Steckverbindung vorgegebene Bewegung oder freie Bewegung überführbar ist.

8. Tretroller nach einem der Ansprüche 1 bis 3, **dadurch gekennzeichnet, dass**
das Gelenk (15) oder das deformierbare Kupplungselement in einer ersten Stellung und/oder in einer zweiten Stellung und/oder in einer weiteren Stellung zwischen der ersten Stellung und/oder der zweiten Stellung arretierbar ist.

9. Tretroller nach Anspruch 1, **dadurch gekennzeichnet, dass**
die Elementdrehachse (8) in einem Winkel von 45° zu der Vertikalen und der Horizontalen geneigt ist.

10. Tretroller nach Anspruch 1, **dadurch gekennzeichnet, dass**
das Gelenk (15) eine Gelenkfläche (13) umfasst, welche Gelenkfläche (13) normal zu der Elementdrehachse (8) orientiert ist.

11. Tretroller nach einem der Ansprüche 1 bis 10, **dadurch gekennzeichnet, dass**
das Element (5) von der ersten Stellung (6) oder von der zweiten Stellung (7) in eine Verwahrstellung überführbar ist.

12. Tretroller nach einem der Ansprüche 1 bis 4, **dadurch gekennzeichnet, dass**
das Element (5) in der ersten Stellung (6) und/oder in der zweiten Stellung (7) in unterschiedlichen Höhenpositionen anlenkbar oder ansteckbar ist.

13. Tretroller nach einem der Ansprüche 1 bis 4, **dadurch gekennzeichnet, dass**
sich das Element in der ersten Stellung (6) im Wesentlichen horizontal und/oder in der zweiten Stellung (7) im Wesentlichen vertikal erstreckt.

14. Tretroller nach einem der Ansprüche 1 bis 13, **dadurch gekennzeichnet, dass**
der Tretroller eine Drehlenkung umfasst, welche mit der Stehfläche (1) verbunden ist und an welcher Lenkvorrichtung (4) jeweils zumindest ein Vorderrad (3) und/oder ein Hinterrad (2) angelenkt ist.

15. Tretroller nach Anspruch 14, **dadurch gekennzeichnet, dass**
die Lenkvorrichtung (4) die um eine Lenkachse verdrehbare Haltestange umfasst, an welcher Haltestange das Vorderrad angebracht ist und welche Haltestange relativ zu der Stehfläche drehbar gelagert ist.

16. Tretroller nach einem der Ansprüche 1, 2, 4 bis 13, **dadurch gekennzeichnet, dass** der Tretroller über eine Gewichtsverlagerungslenkung und/oder Drehlenkung lenkbar ist.

17. Tretroller nach Anspruch 5, **dadurch gekennzeichnet, dass**
ein weiteres Halteelement an das Element (5) und/oder an die Stehfläche (1) anbringbar ist,
welches weitere Halteelement (9) über eine Aufnahme mit dem Element (5) höhenverstellbar verbunden ist.

18. Tretroller nach einem der Ansprüche 1 bis 17, **dadurch gekennzeichnet, dass**
das Element (5) einen Stauraum umfasst.

## Claims

1. A scooter comprising:
a standing surface (1);
at least one rear wheel (2) attached to the standing surface (1) and at least one front wheel (3) attached to the standing surface (1),
which scooter can be moved in a forward direction of travel (20),
wherein the scooter can be moved in the same forward direction of travel (20) when in use in a case defined by a first position (6) of an element (5) and when in use in a further case defined by a second position (7) of the element (5),
wherein the element (5) is attached onto the standing surface (1) via a joint (15), wherein the element (5) can be converted from the first position (6) as a seat element to a second position (7) as a holding bar for a person standing on the standing surface (1),
**characterised in that**
the element (5) is mounted to be pivotable only about an axis of element rotation (8), wherein the axis of element rotation (8) is the angle bisector between the first position (6) and the second position (7) of the element (5).

2. A scooter comprising
a standing surface (1),
at least one rear wheel (2) attached to the standing surface (1) and at least one front wheel (3) attached to the standing surface (1),
which scooter can be moved in a forward direction of travel (20),
wherein the scooter further comprises an element (5) attached to the standing surface (1) and the scooter can be moved in the same forward direction of travel (20) when in use in a case defined by a first position (6) of the element (5) and when in use in a further case defined by a second position (7) of the element (5),
which element (5) can be converted from the first position (6) as a seat element to a second position (7) as a holding bar for a person standing on the standing surface (1),
**characterised in that**
the element (5) is attached via a deformable coupling element.

3. A scooter comprising
a standing surface (1),
at least one rear wheel (2) attached to the standing surface (1) and at least one front wheel (3) attached to the standing surface (1),
which scooter can be moved in a forward direction of travel,
wherein an element (5) can be converted from a first position (6) as a seat element to a second position (7) as a holding bar for a person standing on the standing surface (1),
wherein the scooter can be moved in the same forward direction of travel (20) when in use in a case defined by a first position (6) of the element (5) and when in use in a further case defined by a second position (7) of the element (5),
**characterised in that**
the scooter comprises a weight-shifting steering device and
wherein the wight-shifting steering device further comprises the element (5) attached to the standing surface (1) via a joint (15) and/or via a deformable coupling element.

4. A scooter comprising
a standing surface (1),
at least one rear wheel (2) attached to the standing surface (1) and at least one front wheel (3) attached to the standing surface (1),
a holding element (9), which holding element (9) is connected to the standing surface (1),
which scooter can be moved in a forward direction of travel,
wherein the scooter can be moved in the same forward direction of travel (20) when in use in a case defined by a first position (6) of the element (5) and when in use in a further case defined by a second position (7) of the element (5),
**characterised in that**
the element (5) on the holding element (9) can be plugged sheathing the holding element (9) both in an essentially horizontal position and in an essentially vertical second position,
wherein the element (5) comprises two element parts, which element parts are joined together in order to plug the element (5) onto the holding element (9), wherein
an element part comprises a first console receptacle (17) for receiving the holding element (9) in the first position (6) of the element (5) and a second console receptacle (18) for receiving the holding element (9) in the second position of the element (5),
which element (5) is transferrable from the first position (6) as a sitting element into the second position (7) as a holding bar for a person standing on the standing surface (1) by detaching the element (5) in the first position from the holding element (9) and pinning the element (5) in the second position onto the holding element (9).

5. A scooter comprising
a standing surface (1),
at least one rear wheel (2) attached to the standing surface (1) and at least one front wheel (3) attached to the standing surface (1),
a holding element (9), which holding element (9) is connected to the standing surface (1),
which scooter can be moved in a forward direction of travel,
wherein the scooter can be moved in the same forward direction of travel (20) when in use in a case defined by a first position (6) of the element (5) and when in use in a further case defined by a second position (7) of the element (5),
which element (5) can be converted from a first position (6) as a seat element to a second position (7) as a holding bar for a person standing on the standing surface (1),
**characterised in that**
the console (16) is integral with the standing surface (1), wherein the element (5) comprises a first console receptacle (17) for fitting onto the console (16) in the first position (6) of the element (5) and a second console receptacle (18) for fitting onto the console (16) in the vertical second position of the element (5),
wherein the first console receptacle (17) comprises a tensioning element for securely mounting the element (5) on the console in the first position (6),
wherein the height of the element (5) in the first position is adjustable by the tensioning element.

6. The scooter of any one of claims 1 to 5, **characterised in that** the element (5) is coupled to the standing surface via further elements by a mechanical connection such as a further joint or a plug connection.

7. The scooter of claim 6, **characterised in that**,
in the first position of the second position, the joint or the plug connection can be released, so that the element can be converted by a movement defined by the joint or plug connection or by free movement.

8. The scooter of any one of claims 1 to 3, **characterised in that** the joint (15) or the deformable coupling element can be arrested in a first position and/or in a second position and/or in a further position between the first position and the second position.

9. The scooter of claim 1, **characterised in that**
the axis of element rotation (8) is inclined at an angle of 45° with respect to the vertical and to the horizontal.

10. The scooter of claim 1, **characterised in that**
the joint (15) comprises a joint surface (13), which joint surface (13) extends normally to the axis of element rotation (8).

11. The scooter of any one of claims 1 to 10, **characterised in that**
the element (5) can be converted into a secure position from the first position (6) or the second position (7).

12. The scooter of any one of claims 1 to 4, **characterised in that**
the element (5) can be attached or plugged at different heights in the first position (6) and/or the second position (7).

13. The scooter of any one of claims 1 to 4, **characterised in that**
the element extends essentially horizontally in the first position (6) and/or essentially vertically in the second position (7).

14. The scooter of any one of claims 1 to 13, **characterised in that**
the scooter comprises a rotary steering device, which is connected to the standing surface (1) and to which steering device (4) at least one front wheel (3) and/or one rear wheel (2) are attached, respectively.

15. The scooter of claim 14, **characterised in that**
the steering device (4) comprises the holding bar twistable about a steering axis, on which holding bar the front wheel is mounted and which holding bar is mounted rotatably with respect to the standing surface.

16. The scooter of any one of claims 1, 2, 4 to 13, **characterised in that**
the scooter can be steered via a weight-shifting steering device and/or a rotary steering device.

17. The scooter of claim 5, **characterised in that**
a further holding element is mountable to the element (5) and/or the standing surface (1),
which further holding element (9) is connected to the element (5) in a height-adjustable manner via a receptacle.

18. The scooter of any one of claims 1 to 17, **characterised in that**
the element (5) comprises a storage space.

## Revendications

1. Trottinette comprenant:
une surface d'appui (1);
au moins une roue arrière (2) fixée à la surface d'appui (1) et au moins une roue avant (3) fixée à la surface d'appui (1),
ladite trottinette pouvant peut être déplacée dans un sens de déplacement vers l'avant (20),
ladite trottinette pouvant être déplacée dans le même sens de déplacement vers l'avant (20) lorsqu'elle est utilisée dans un cas défini par une première position (6) d'un élément (5) et lorsqu'elle est utilisée dans un autre cas défini par une deuxième position (7) de l'élément (5),
l'élément (5) étant fixé sur la surface d'appui (1) par une articulation (15), l'élément (5) pouvant être transformé de la première position (6) comme élément de siège à une deuxième position (7) comme barre de maintien pour une personne debout sur la surface d'appui (1),
**caractérisée en ce que**
l'élément (5) est monté de manière à pouvoir pivoter autour d'un seul axe de rotation (8) de l'élément, ledit axe de rotation (8) de l'élément étant la bissectrice de l'angle entre la première position (6) et la deuxième position (7) de l'élément (5).

2. Trottinette comprenant:
une surface d'appui (1);
au moins une roue arrière (2) fixée à la surface d'appui (1) et au moins une roue avant (3) fixée à la surface d'appui (1),
ladite trottinette pouvant peut être déplacée dans un sens de déplacement vers l'avant (20),
ladite trottinette comprenant en outre un élément (5) fixé sur la surface d'appui (1) et la trottinette pouvant être déplacée dans le même sens de déplacement vers l'avant (20) lorsqu'elle est utilisée dans un cas défini par une première position (6) d'un élément (5) et lorsqu'elle est utilisée dans un autre cas défini par une deuxième position (7) de l'élément (5),
ledit élément (5) pouvant être transformé de la première position (6) comme élément de siège à une deuxième position (7) comme barre de maintien pour une personne debout sur la surface d'appui (1),
**caractérisée en ce que**
l'élément (5) est fixé par un élément d'accouplement déformable.

3. Trottinette comprenant:
une surface d'appui (1);
au moins une roue arrière (2) fixée à la surface d'appui (1) et au moins une roue avant (3) fixée à la surface d'appui (1),
ladite trottinette pouvant peut être déplacée dans un sens de déplacement vers l'avant,
un élément (5) pouvant être transformé de la première position (6) comme élément de siège à une deuxième position (7) comme barre de maintien pour une personne debout sur la surface d'appui (1),
ladite trottinette pouvant être déplacée dans le même sens de déplacement vers l'avant (20) lorsqu'elle est utilisée dans un cas défini par une première position (6) d'un élément (5) et lorsqu'elle est utilisée dans un autre cas défini par une deuxième position (7) de l'élément (5),
**caractérisée en ce que**
la roue arrière (2) ou la roue avant (3) est dirigeable au moyen d'un dispositif de direction à déplacement de poids et
le dispositif de direction à déplacement de poids comprend en outre l'élément (5) fixé à la surface d'appui (1) par une articulation (15) et/ou par un élément d'accouplement déformable.

4. Trottinette comprenant:
une surface d'appui (1);
au moins une roue arrière (2) fixée à la surface d'appui (1) et au moins une roue avant (3) fixée à la surface d'appui (1),
un élément de maintien (9), ledit élément de maintien (9) étant relié à la surface d'appui (1),
ladite trottinette pouvant peut être déplacée dans un sens de déplacement vers l'avant,
ladite trottinette pouvant être déplacée dans le même sens de déplacement vers l'avant (20) lorsqu'elle est utilisée dans un cas défini par une première position (6) d'un élément (5) et lorsqu'elle est utilisée dans un autre cas défini par une deuxième position (7) de l'élément (5),
**caractérisée en ce que**
l'élément (5) sur l'élément de maintien (9) peut être attaché de manière à envelopper l'élément de maintien (9) dans une position essentiellement horizontale et dans une deuxième position essentiellement verticale,
ledit élément (5) comprenant deux parties d'élément, lesdites parties d'élément étant reliées entre elles afin d'attacher l'élément (5) à l'élément de maintien (9), une partie d'élément comprenant un premier logement de console (17) pour recevoir l'élément de maintien (9) dans la première position (6) de l'élément (5) et un deuxième logement de console (18) pour recevoir l'élément de maintien (9) dans la deuxième position de l'élément (5),
ledit élément (5) pouvant être transformé de la première position (6) comme élément de siège à la deuxième position (7) comme barre de maintien pour une personne debout sur la surface d'appui (1) en détachant l'élément (5) dans la première position de l'élément de maintien (9) et attachant l'élément (5) à l'élément de maintien (9) dans la deuxième position.

5. Trottinette comprenant:
une surface d'appui (1);
au moins une roue arrière (2) fixée à la surface d'appui (1) et au moins une roue avant (3) fixée à la surface d'appui (1),
un élément de maintien (9), ledit élément de maintien (9) étant relié à la surface d'appui (1),
ladite trottinette pouvant peut être déplacée dans un sens de déplacement vers l'avant,
ladite trottinette pouvant être déplacée dans le même sens de déplacement vers l'avant (20) lorsqu'elle est utilisée dans un cas défini par une première position (6) d'un élément (5) et lorsqu'elle est utilisée dans un autre cas défini par une deuxième position (7) de l'élément (5),
ledit élément (5) pouvant être transformé de la première position (6) comme élément de siège à une deuxième position (7) comme barre de maintien pour une personne debout sur la surface d'appui (1),
**caractérisée en ce que**
la console (16) est solidaire de la surface d'appui (1), ledit élément (5) comprenant un premier logement de console (17) pour être monté sur la console (16) dans la première position (6) de l'élément (5) et un deuxième logement de console (18) pour être monté sur la console (16) dans la deuxième position verticale de l'élément (5),
ledit premier logement de console (17) comprenant un élément de tension pour monter solidement l'élément (5) sur la console dans la première position (6),
la hauteur de l'élément (5) dans la première position étant réglable par l'élément de tension.

6. Trottinette selon l'une des revendications 1 à 5, **caractérisée en ce que** l'élément (5) est relié à la surface d'appui via d'autres éléments par un accouplement mécanique, tel qu'une autre articulation ou un raccordement à emboîter.

7. Trottinette selon la revendication 6, **caractérisée en ce que**,
l'articulation ou le raccordement à emboîter peut être détaché dans la première position ou la deuxième position tel que l'élément peut transformé par un déplacement défini par l'articulation ou le raccordement à emboîter ou par un déplacement libre.

8. Trottinette selon l'une des revendications 1 à 3, **caractérisée en ce que** l'articulation (15) ou l'élément d'accouplement déformable peut être arrêté dans une première position et/ou dans une deuxième position et/ou dans une autre position entre la première et la deuxième position.

9. Trottinette selon la revendication 1, **caractérisée en ce que**
l'axe (8) de rotation de l'élément est incliné à un angle de 45° par rapport à la verticale et à l'horizontale.

10. Trottinette selon la revendication 1, **caractérisée en ce que**
l'articulation (15) comprend une surface d'articulation (13), ladite surface d'articulation (13) s'étendant normalement à l'axe (8) de rotation de l'élément.

11. Trottinette selon l'une des revendications 1 à 10, **caractérisée en ce que**
l'élément (5) peut être déplacé dans une position de rangement à partir de la première position (6) ou de la deuxième position (7).

12. Trottinette selon l'une des revendications 1 à 4, **caractérisée en ce que**
l'élément (5) peut être fixé ou emboîté à différentes hauteurs dans la première position (6) et/ou la deuxième position (7).

13. Trottinette selon l'une des revendications 1 à 4, **caractérisée en ce que**
l'élément s'étend essentiellement horizontalement dans la première position (6) et/ou essentiellement verticalement dans la deuxième position (7).

14. Trottinette selon l'une des revendications 1 à 13, **caractérisée en ce que**
la trottinette comprend un dispositif de direction rotatif, qui est relié à la surface d'appui (1) et auquel est fixé au moins une roue avant (3) et/ou une roue arrière (2), respectivement.

15. Trottinette selon la revendication 14, **caractérisée en ce que**
le dispositif de direction (4) comprend la barre de maintien qui peut être tournée tourner autour d'un axe de direction, la roue avant étant montée sur ladite barre de maintien et la barre de maintien étant montée de manière rotative par rapport à la surface d'appui.

16. Trottinette selon l'une des revendications 1, 2, 4 to 13, **caractérisée en ce que**
la trottinette peut être dirigé au moyen d'un dispositif de direction à déplacement de poids et/ou d'un dispositif de direction rotatif.

17. Trottinette selon la revendication 5, **caractérisée en ce que**
un autre élément de maintien peut être monté sur l'élément (5) et/ou la surface d'appui (1),
ledit autre élément de maintien (9) étant relié à l'élément (5) par un logement de manière réglable en hauteur.

18. Trottinette selon l'une des revendications 1 à 17, **caractérisée en ce que**
l'élément (5) comprend un espace de rangement.
